# EUROPEAN PATENT APPLICATION

(11) **EP 4 629 747 A1**
(43) Date of publication of application: **08.10.2025**
(21) Application number: 25158210.2
(22) Date of filing: 29.03.2024
(51) Int. Cl.: H05B 1/02, B60H 1/00, F24F 11/00

(54) **HEATING SYSTEMS FOR A REFRIGERATION SYSTEM**

(62) Divisional of application: 24167825.9
(71) Applicant: Thermo King LLC, Minneapolis, MN 55420 (US)
(72) Inventor: SMYTH, Ciaran, Galway (IE); KMOCH, Vladimir, 15000 Praha (CZ)
(74) Representative: Haseltine Lake Kempner LLP

(57) **Abstract**

The present disclosure relates to a heating system 200 for a refrigeration system 20. The heating system 200 comprises: a heater 260 disposed within a space 24; power terminals 202, 204 configured to receive electrical power from a source 115; a heater temperature sensor module 230 configured to change from a first state to a second state when a temperature associated with the heater 260 reaches exceeds a heater temperature action threshold; an electrical interlock arrangement 280 configured to prevent supply of electrical power from the power terminals 202, 204 to the heater 260 when the heater temperature sensor module is in the second state; a semiconductor switch 222 operable to modulate supply of electrical power from the power terminals 202, 204 to the heater 260; a driver module 229 configured to control the semiconductor switch 222 based on a drive signal; an interruption switch 242 configured to prevent the driver module 229 from receiving the drive signal when in a non-conducting state; and a concentration sensor module 240 configured to: monitor a concentration of refrigerant in the space 24; cause the interruption 242 switch to be in the non-conducting state when the monitored concentration of refrigerant reaches or exceeds a concentration action threshold.

## Description

### FIELD OF THE INVENTION

The present disclosure relates to heating systems for a refrigeration system (e.g., a transport refrigeration system). The present disclosure also relates to refrigeration systems comprising such heating systems.

### BACKGROUND OF THE INVENTION

It is increasingly desirable to use process fluids (e.g., refrigerants) with relatively low global warming potential (GWP) in refrigeration systems, including in transport refrigeration systems. However, such refrigerants have some properties which are significantly different from corresponding properties of traditional refrigerants. These different properties are associated with both performance and safety challenges in the context of refrigeration systems.

The present invention has been devised with the foregoing in mind.

### SUMMARY OF THE INVENTION

According to a first aspect there is provided a heating system for a refrigeration system, the heating system comprising: a heater; power terminals configured to receive electrical power from a source; a heater temperature sensor module configured to change from a first state to a second state when a temperature associated with the heater reaches or exceeds a heater temperature action threshold; and an electrical interlock arrangement configured to prevent supply of electrical power from the power terminals to the heater when the heater temperature sensor module is in the second state.

It may be that the heater temperature sensor module comprises a bimetallic switch.

The heating system may comprise a supply switch located between the power terminals and the heater. The electrical interlock arrangement may be configured to prevent supply of electrical power from the power terminals to the heater when the heater temperature sensor module is in the second state by causing the supply switch to be in a non-conducting state.

The heating system may comprise a pathway for conveying a refrigerant. The heater temperature action threshold may be at least 100°C lower than an autoignition temperature of the refrigerant. The heater temperature action threshold may be no greater than 200°C.

It may be that the heating system comprises a controller configured to determine whether the heater temperature sensor module is in the first state or the second state.

The heating system may comprise a semiconductor switch operable to modulate supply of electrical power from the power terminals to the heater. The heating system may further comprise a driver module configured to control the semiconductor switch based on a drive signal.

According to a second aspect there is provided a heating system for a refrigeration system, the heating system comprising: a heater disposed within a space; power terminals configured to receive electrical power from a source; a semiconductor switch operable to modulate supply of electrical power from the power terminals to the heater; a driver module configured to control the semiconductor switch based on a drive signal; an interruption switch configured to prevent the driver module from receiving the drive signal when in a non-conducting state; and a concentration sensor module configured to: monitor a concentration of refrigerant in the space; and cause the interruption switch to be in the non-conducting state when the monitored concentration of refrigerant reaches or exceeds a concentration action threshold.

The heating system may comprise a controller configured to determine whether the interruption switch is in the non-conducting state.

In accordance with the first aspect and/or the second aspect, the driver module may be configured to vary a duty cycle of a control signal for the semiconductor switch based on the drive signal.

In accordance with the first aspect and/or the second aspect, the heating system may comprise a controller configured to generate the drive signal.

In accordance with the first aspect and/or the second aspect, the heating system may comprise a heat exchanger configured to allow a refrigerant to be conveyed therethrough. The heater may be configured to provide heat to the heat exchanger.

It may be that the controller is configured to: determine a temperature associated with the heat exchanger; and generate the drive signal based on the determined temperature.

It may be that the controller is configured to determine the temperature associated with the heat exchanger based on a signal from a heat exchanger temperature sensor module configured to monitor a temperature associated with the heat exchanger.

In accordance with a third aspect, there is provided a heating system for a refrigeration system, the heating system comprising: a heater disposed within a space; power terminals configured to receive electrical power from a source; a heater temperature sensor module configured to change from a first state to a second state when a temperature associated with the heater reaches exceeds a heater temperature action threshold; an electrical interlock arrangement configured to prevent supply of electrical power from the power terminals to the heater when the heater temperature sensor module is in the second state; a semiconductor switch operable to modulate supply of electrical power from the power terminals to the heater; a driver module configured to control the semiconductor switch based on a drive signal; an interruption switch configured to prevent the driver module from receiving the drive signal when in a non-conducting state; and a concentration sensor module configured to: monitor a concentration of refrigerant in the space; cause the interruption switch to be in the non-conducting state when the monitored concentration of refrigerant reaches or exceeds a concentration action threshold.

A heating system in accordance with the third aspect may comprise any suitable one of, or any suitable combination of, the features described with respect to the first aspect or the second aspect.

According to a fourth aspect there is provided a refrigeration system comprising a heating system in accordance with the first aspect, the second aspect or the third aspect.

### BRIEF DESCRIPTION OF THE DRAWINGS

**FIG. 1** shows a vehicle comprising a transport refrigeration system;
**FIG. 2** is a schematic diagram of example transport refrigeration unit suitable for use with the vehicle of FIG. 1, the example transport refrigeration unit comprising a vapour-compression refrigeration circuit and a subsystem;
**FIG. 3** is a diagram which shows an example subsystem suitable for use with the transport refrigeration unit of FIG. 2, the subsystem being in a first mode;
**FIG. 4** is a diagram which shows the example subsystem of FIG. 3 in a second mode; and
**FIG. 5** is a diagram which shows the example subsystem of FIG. 3 in a third mode.

### DETAILED DESCRIPTION OF THE INVENTION

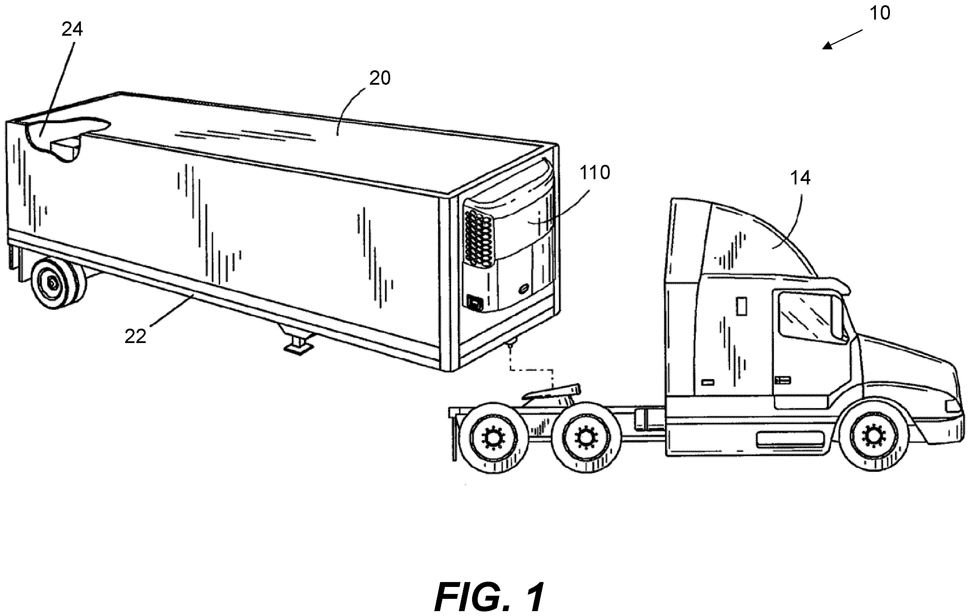

**FIG. 1** shows a vehicle 10 comprising a transport refrigeration system 20. In the example of FIG. 1, the transport refrigeration system 20 forms a part of an over-the-road refrigerated semi-trailer having a structure 22 supporting (or forming) at least one climate-controlled compartment 24 which is configured to be cooled and/or heated by a TRU 110. The climate-controlled compartment 24 can take the form of multiple compartments or have multiple zones. The structure 22 includes a chassis. The structure 22 supports the TRU 110. The vehicle 10 further comprises a tractor unit 14 removably couplable to the trailer.

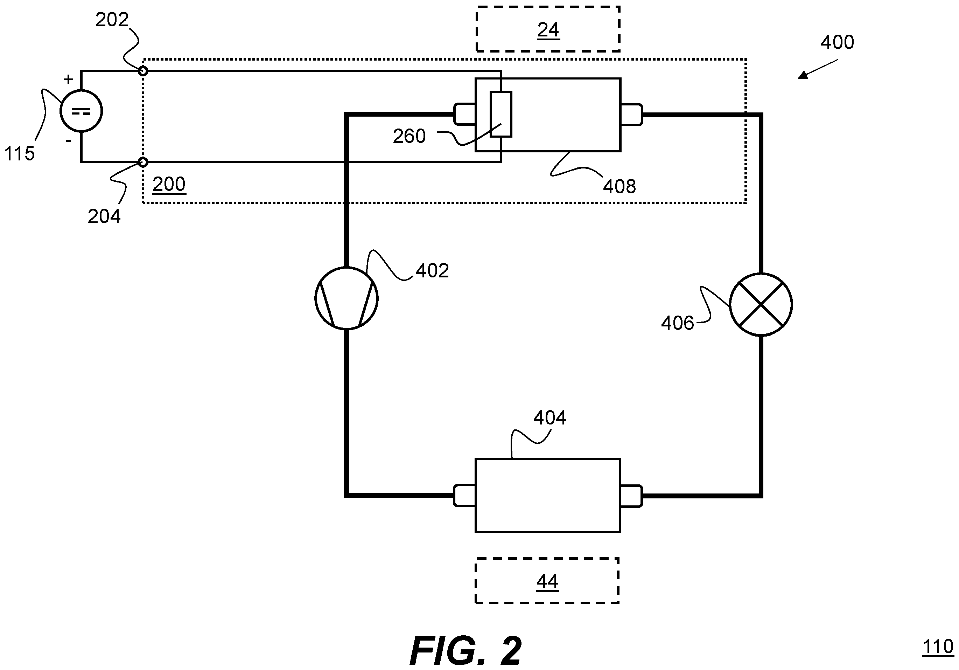

**FIG. 2** schematically shows a diagram of an example TRU 110 suitable for use within the vehicle 10 and the transport refrigeration system 20 of FIG. 1. The TRU 110 comprises a vapour-compression refrigeration circuit 400 and a heating system 200 (which may also be referred to as a heating subsystem 200 or, more simply, a subsystem 200).

The vapour-compression refrigeration circuit 400 includes an evaporator 408 which is configured to receive heat from the climate-controlled compartment 24 of the transport refrigeration system 20 and a condenser 404 which is configured to reject heat to a thermal sink 44 (e.g., ambient air outside of the climate-controlled compartment 24) when the vapour-compression refrigeration circuit 400 is operated in a cooling mode (e.g., to provide cooling to the climate-controlled compartment 24). For these purposes, the vapour-compression refrigeration circuit 400 also includes a compressor 402 and an expansion valve 406. Accordingly, the vapour-compression refrigeration circuit 400 may be controlled to cause heat to be removed from the climate-controlled compartment 24. The condenser 404 and the evaporator 408 are each heat exchangers 404, 408 which are configured to facilitate heat transfer heat exchange between refrigerant conveyed therethrough (e.g., through a pathway provided thereby) and an external medium (i.e., the thermal sink 44 and the climate-controlled compartment 24). The vapour-compression refrigeration circuit 400 may also be operable in a heating mode to provide heating to the climate-controlled compartment 24, as will be understood by those skilled in the art.

Before operation, the vapour-compression refrigeration circuit 400 is charged with refrigerant. During operation, refrigerant is circulated within (e.g., conveyed around) the vapour-compression refrigeration circuit 400 in a manner which will be understood by those skilled in the art. The refrigerant may be, in particular, an A2L refrigerant such as R454A. Such refrigerants may be relatively flammable, and may thus be referred to as a flammable refrigerant or flammable refrigerants.

The subsystem 200 comprises a heater 260 (e.g., a heating element 260) disposed within a space (e.g., the climate-controlled compartment 24). The evaporator 408 also forms a part of the subsystem 408. In the example of Figure 2, the heater 260 is provided proximal to the evaporator 408. Accordingly, in use, the heater 260 may be operated to provide heating to the evaporator 408. However, this disclosure envisages that the heater 260 may be provided elsewhere within the TRU 110. In general terms, the heater 260 is configured to provide electrical heating to the TRU 110. The electrical system 200 is configured to control a supply of electrical power from the DC link 210 to the heater 260 and thereby cause the heater 260 to generate heat for heating the TRU 110. The heater 260 generates heat by means of resistive (e.g., Ohmic) heating when electrical power is supplied thereto. In examples in accordance with the present disclosure, the heater 260 may be used for defrosting the evaporator 408, for preventing temperature drift in the climate-controlled compartment 24 when the vapour-compression refrigeration circuit 400 is operated in a cooling mode (e.g., for precision cooling), and/or for supplementary heating to the climate-controlled compartment 24 when the vapour-compression refrigeration circuit 400 is operated in a heating mode.

The subsystem 200 comprises a pair of power terminals 202, 204 (i.e., a first power terminal 202 and a second power terminal 204) at which, in use, electrical power is received from a source 115. The source 115 may be, for example, a DC link of the TRU 110. The DC link may receive electrical power from, for instance, an electrical energy storage device (e.g., a battery or a fuel cell) provided to the transport refrigeration system 20, a generator set (e.g., an alternator) provided to the vehicle, or an external power supply (e.g., shore power) received via an external connection port when the transport refrigeration system 20 is stationary.

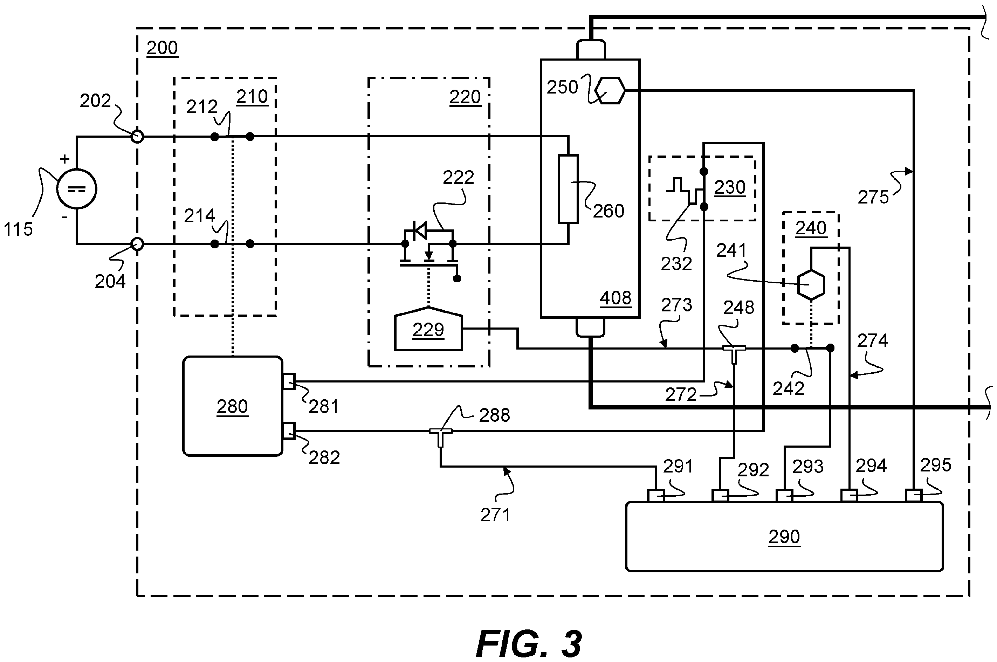

**FIG. 3** is a schematic diagram showing an example subsystem 200 suitable for use with the TRU 110 described above with reference to FIG. 2, with like reference signs denoting similar or common features.

The subsystem 200 comprises a local controller 290 (e.g., a controller 290). The local controller 290 may be referred to as a remote input-output controller (RIOC) 290. The RIOC 290 comprises a first port 291, a second port 292, a third port 293, a fourth port 294, and a fifth port 295. Each port 291-295 functions as a physical interface between a processor of the RIOC 290 and a respective channel 271-275. The function of the RIOC 290 is described in further detail below.

The subsystem 200 comprises an isolation arrangement 210 electrically coupled to the power terminals 202, 204. In turn, the isolation arrangement 210 comprises a first contactor 212 and a second contactor 214. The first contactor 212 is electrically coupled to the first power terminal 202 and the second contactor 214 is electrically coupled to the second power terminal 204. When each contactor 212 is closed, electrical power can flow from the power terminals 202, 204 to the heater 260 (subject to the action of the modulation arrangement 220 described below). When each contactor 212, 214 is open, electrical power cannot flow from the power terminals 202, 204 to the heater 260 (regardless of the action of the modulation arrangement 220). Each contactor 212, 214 may be referred to as a supply switch having a non-conducting state (i.e., when open) and a conducting state (i.e., when closed). It will be appreciated that other types of switches (e.g., supply switches) may be used in place of the contactors 212, 214, and that the isolation arrangement 210 may comprise only a single supply switch (e.g., only one of the contactors 212, 214).

The subsystem 200 further comprises a modulation arrangement 220 comprising a semiconductor switch 222 and a driver module 229. The semiconductor switch 222 is operable to modulate supply of electrical power from the power terminals 202, 204 to the heater 260 via the isolation arrangement 210 by selectively completing and breaking a conduction pathway from the first power terminal 202 to the second power terminal 204 through the heater 260. The driver module 229 is configured to control the semiconductor switch 222 based on a drive signal supplied thereto. More specifically, the driver module is configured to control the semiconductor switch by providing a control signal thereto, as will be understood by those skilled in the art. The semiconductor switch 222 may be, for example, a solid state relay (SSR).

The third channel 273 electrically (and thereby communicatively) couples the third port 293 of the RIOC 290 to the drive module 229 of the modulation arrangement 220. The third channel 273 is configured to convey the drive signal from the RIOC 290 to the drive module 229. As a result, the third channel 273 may be referred to as a drive channel 273. The driver module 229 is configured to generate the control signal for controlling the semiconductor switch 222 based on the drive signal received on the drive channel 273. Specifically, the driver module 229 may generate a control signal having a duty cycle. By way of example, the driver module may generate a substantially square wave control signal being defined by the duty cycle. When the control signal is HIGH, the semiconductor switch 222 may be in the conducting state whereas when the control signal is LOW, the semiconductor switch 222 may be in the non-conducting state. Hence electrical power can only flow from the isolation arrangement 210 to the heater 260 when the control signal is HIGH. Accordingly, the duty cycle of the control signal defines a time-averaged amount of electrical power which flows to the heater 260 when the contactors 212, 214 are closed. By varying the duty cycle (e.g., by modulating the pulse width) of the control signal, the driver module 229 can vary the time-averaged amount of electrical power supplied to the heater. Accordingly, the control signal may be referred to as a pulse width modulated (PWM) control signal.

The subsystem 200 also comprises a heater temperature sensor module 230. More specifically, the heater temperature sensor module 230 is a bimetallic switch 232 (which may also be referred to as a bimetallic thermostat). The bimetallic switch 232 is not in contact with, but is proximal to, the heater 260. In use, heat generated by the heater 260 is transferred to a portion of the bimetallic switch 232 by means of radiative heat transfer. Accordingly, a temperature of the portion of the bimetallic switch 232 is associated with a temperature of the heater 260. The bimetallic switch 232 is configured to change from a first state to a second state when the temperature of the portion thereof reaches or exceeds a threshold (i.e., a heater temperature action threshold, as referred to herein). A suitable bimetallic switch 232 may be a KLIXON^{®} switch. The first state of the bimetallic switch 232 is a closed/conducting state, whereas the second state is an open/non-conducting state. Use of a bimetallic switch 232 as part of the heater temperature sensor module 230 is preferred because it provides a robust and resettable physical switching capability for the purposes described herein. Additionally, use of a bimetallic switch 232 as part of the heater temperature sensor module 230 is advantageous because it is fast-acting and does not require any burdensome conditioning or post-processing of an output signal therefrom.

Further, the subsystem 200 comprises an electrical interlock arrangement 280 (or, more simply, an interlock arrangement 280) adapted to control the isolation arrangement 210. The interlock arrangement 280 comprises a first port 281, a second port 282, and internal circuitry which forms part of a conduction path passing from the first port 281, through the second port 282, through the heater temperature sensor module 230 (e.g., the bimetallic switch 232) and back to the first port 281 to form an interlock loop (which may be referred to as a high voltage interlock loop or a hazardous voltage interlock loop, HVIL). When the bimetallic switch 232 is in the closed/conducting state, the interlock loop is complete. Conversely, when the bimetallic switch 232 is in the open/non-conducting state, the interlock loop is broken. When the interlock loop is complete and an electric current flows therethrough, the interlock arrangement 280 permits (e.g., and thereby causes) each contactor 212, 214 to be closed, whereas when the interlock loop is broken and an electric current does not flow therethrough, the interlock arrangement 280 permits (e.g., and thereby causes) at least one contactor 212, 214 (e.g., one or both contactors 212, 214) to be open. In this way, the interlock arrangement 280 is configured to prevent supply of electrical power from the power terminals 202, 204 to the heater 260 when the heater temperature sensor module 230 is in the second state. The interlock arrangement 280 comprises internal circuitry which is suitable for achieving these ends, as will be familiar to those skilled in the art.

The first channel 271 extends from the first port 291 of the RIOC 290 to a first splice location 288 located on the interlock loop. Accordingly, the RIOC 290 is able to monitor a status of the interlock loop by means of a signal received from the first splice location 288 (e.g., a signal corresponding to whether a current is flowing through the interlock loop/whether the interlock loop is complete) along the first channel 271 (and thereby indirectly monitor which state the heater temperature sensor module 230 is in). The state of the heater temperature sensor module 230 may then be used as part of a software which the RIOC 290 runs in use.

The subsystem 200 comprises a concentration sensor module 240. The RIOC 290 is configured to provide a supply of electrical power (e.g., a drive current) to the concentration sensor module 240 along the fourth channel 274. The concentration sensor module 240 is functionally coupled to an interruption switch 242. The interruption switch 242 is operable to move between a closed/conducting state (e.g., a first state) and a open/non-conducting state (e.g., a second state). The concentration sensor module 240 includes a concentration transducer 241 which is configured to monitor a concentration of refrigerant within the space in which the heater 260 is disposed. Refrigerant may be present within the space due to the development of a leak from the vapour-compression refrigeration circuit 400 into the space. The concentration sensor module 240 is more broadly configured such that when the concentration of refrigerant within the space is below a threshold (i.e., a concentration action threshold, as referred to herein), the concentration sensor module 240 causes the interruption switch 242 to be in the first state. On the other hand, the concentration sensor module 240 is configured such that when the concentration of refrigerant within the space reaches or exceeds the concentration action threshold, the concentration sensor module 240 causes the interruption switch 242 to be in the second state. If a leak resulting in the presence of refrigerant within the space is relatively small, it may be that the concentration of refrigerant within the space remains less than the concentration action threshold because of diffusion of refrigerant out of the space into a surrounding environment. If so, the existence of the leak will not lead to the concentration of refrigerant within the space reaching or exceeding the concentration action threshold and thus the interruption switch 242 will remain in the first state.

The interruption switch 242 is located on the drive channel 273. Consequently, the interruption switch 242 is arranged within the subsystem 200 such that, when in the first state, the drive signal can be supplied from the RIOC 290 to the driver module 229 along the drive channel 273. Conversely, when the interruption switch 242 is in the second state, the drive channel 273 is interrupted such that the drive signal cannot be supplied from the RIOC 290 to the driver module 229 along the drive channel 273.

The second channel 272 extends from the second port 292 of the RIOC 290 to a second splice location 248 located on the drive channel 273 between the interruption switch 242 and the driver module 229. The RIOC 290 is configured to monitor transmission of the drive signal along the drive channel 273 by means of a signal received from the second splice location 248 along the second channel 272 (and thereby indirectly monitor which state the interruption switch 242 is in). The state of the interruption switch 242 may then be used by the software which the RIOC 290 runs in use. In particular, the interruption switch 242 being in the open/non-conducting state corresponds to the concentration of refrigerant within the space reaching or exceeding the concentration action threshold. The software run by the RIOC 290 may make cause the RIOC 290 to take various actions in response to a determination, based on the signal received along the second channel 272, that the concentration of refrigerant within the space reaches or exceeds the concentration action threshold (e.g., transmitting information relating to this determination to a central controller of the vapour-compression refrigeration circuit 400 such as a main application controller (MAC), raising alerts, causing shutdown of other components and the like).

The subsystem 200 also comprises a heat exchanger temperature sensor module 250 configured to monitor a temperature associated with the evaporator 408. The heat exchanger temperature sensor module 250 is electrically and communicatively coupled to the RIOC 290 via the fifth channel 275. Accordingly, the RIOC 290 is configured to determine a temperature associated with (e.g., of) the evaporator 480 based on a signal received from the heat exchanger temperature sensor module 250 along the fifth channel 275.

In use, the RIOC 290 generates the drive signal and attempts to transmit the drive signal to the driver module 229 along the drive channel 273. More specifically, the RIOC 290 generates the drive signal based on the temperature associated with the evaporator 480 as discussed in greater detail below.

In FIG. 3, the subsystem 200 is in a first mode. In the first mode, the bimetallic switch 232 is in the first state thereof and the interruption switch 240 is in the first state thereof. As a result, during operation, the isolation arrangement 210 receives electrical power from the power terminals 202, 204 while the driver module 229 controls the semiconductor switch 222 based on the drive signal produced by the RIOC 290. Accordingly, electrical power flows from the power terminals 202, 204 to the heater 260 via the isolation arrangement 210 and the modulation arrangement 220. The amount of electrical power which flows in this way is dependent on the duty cycle of the drive signal as discussed above.

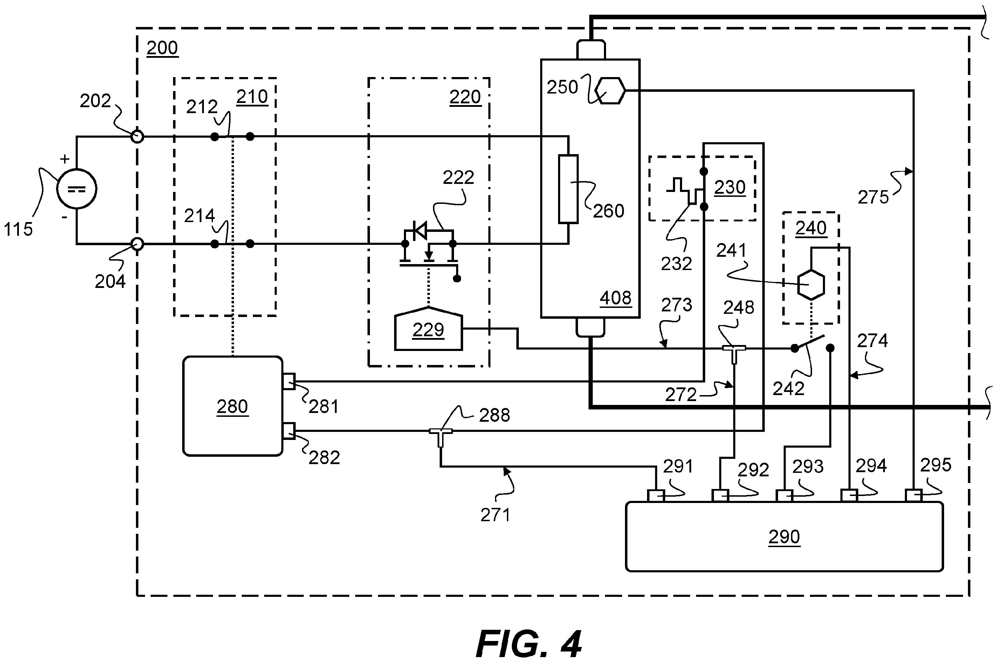

In **FIG. 4****,** the subsystem 200 is in a second mode. In the second mode, the bimetallic switch 232 is in the first state thereof and the interruption switch 240 is in the second state thereof. As a result, during operation, the isolation arrangement 210 receives electrical power from the power terminals 202, 204 but the driver module 229 does not receive a drive signal from the RIOC 290 and thus no control signal is provided to the semiconductor switch 222. The semiconductor switch is therefore expected to be in the non-conducting state.

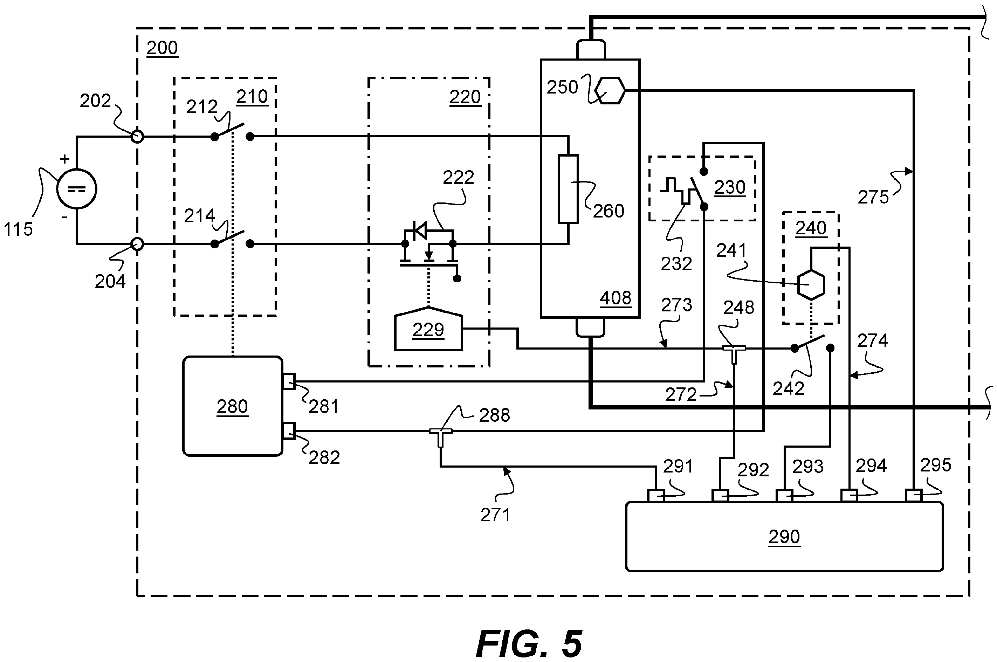

In **FIG. 5****,** the subsystem 200 is in a third mode. In the third mode, the bimetallic switch 232 is in the second state thereof and the interruption switch 240 is in the second state thereof. As a result, the interlock arrangement 280 causes the isolation arrangement 210 to prevent supply of electrical power from the power terminals 202, 204 to the heater 260 by opening the contactors 212, 214.

The heater 260 is, in principle, capable of acting as an ignition source with respect to any refrigerant present within the space in which the evaporator 408 is disposed. Generally, the heater 260 will act as an ignition source in this way if the heater 260 approaches the autoignition temperature of the refrigerant and the concentration of refrigerant within the space reaches or exceeds a lower flammability limit (LFL) thereof. The heater 260 may be especially capable of acting as an ignition source for the refrigerant within the space if a voltage supplied to the heater 260 (e.g., by the source/DC link 115) is relatively high and is subject to variation in use. For example, if the heater is rated for 6 kW at 700 VDC and the voltage supplied to the heater increases by around 21% to 850 VDC, the power output of the heater will increase by around 47% to 8.84 kW. This may result in the temperature of the heater 260 increasing substantially and thus approaching, reaching or exceeding the autoignition temperature of the refrigerant.

When in the first mode (see FIG. 3), the RIOC 290 generates the drive signal based on the signal received from the heat exchanger temperature sensor module 250 and supplies the drive signal to the driver module 229 along the drive channel 273. The driver module 229 then controls the semiconductor switch using the control signal which has been generated based on the drive signal.

As an example, the RIOC 290 may generate the drive signal based on a lower heat exchanger temperature action threshold and an upper heat exchanger temperature action threshold as well as the signal received from the heat exchanger temperature sensor module 250. If the signal received from the heat exchanger temperature sensor module is less than the lower heat exchanger temperature action threshold, the RIOC 290 may generate a drive signal corresponding to a high power demand for the heater 260. The control signal generated by the driver module 229 based on such a drive signal may have a relatively high duty cycle. On the other hand, if the signal received from the heat exchanger temperature sensor module is greater than the upper heat exchanger temperature action threshold, the RIOC 290 may generate a drive signal corresponding to a low power demand or a zero power demand for the heater 260. The control signal generated by the driver module 229 based on such a drive signal may have a relatively low duty cycle. Further, if the signal received from the heat exchanger temperature sensor module is between the lower heat exchanger temperature action threshold and the upper heat exchanger temperature action threshold inclusive, the RIOC 290 may generate a drive signal corresponding to an intermediate power demand for the heater 260 and the control signal generated by the driver module may be generated accordingly.

The signal received from the heat exchanger temperature sensor module being less than the lower heat exchanger temperature action threshold may correspond to a nominal condition of the subsystem 200. The signal received from the heat exchanger temperature sensor module being greater than the upper heat exchanger temperature action threshold may correspond to a shutdown fault condition in the subsystem 200 and the RIOC 290 may generate a zero power demand for the heater 260 with the intention of shutting down operation of the heater 260 for the sake of safety considerations. The signal received from the heat exchanger temperature sensor module being between the upper heat exchanger temperature action threshold and the lower heat exchanger temperature action threshold may correspond to a warning fault condition in the subsystem 200 and the RIOC 290 may generate an intermediate power demand for the heater 260 with the intention of constraining operation of the heater 260 for the sake of safety considerations while allowing the heater 260 to continue operating.

As another example, the RIOC 290 may generate the drive signal based on a heat exchanger temperature setpoint as well as the signal received from the heat exchanger temperature sensor module 250. To this end, the RIOC 290 may execute a proportional, integral, and/or derivative control regime based on the heat exchanger temperature setpoint.

If, however, the concentration of refrigerant within the space in which the evaporator 408 is disposed reaches or exceeds the concentration action threshold, the subsystem 200 moves into the second mode (see FIG. 4). In the second mode, although the RIOC 290 may continue to generate the drive signal based on the signal received from the heat exchanger temperature sensor module 250, the drive signal cannot be supplied to the driver module 229 along the drive channel 273 due to the action of the interruption switch 242. Accordingly, regardless of the action of the RIOC 290, the driver module 229 will not generate a control signal for the semiconductor switch 222 when the concentration of refrigerant within the space in which the evaporator 408 is disposed reaches or exceeds the concentration action threshold.

Accordingly, in the second mode, it is expected that electrical power will not be supplied to the heater 260 because the semiconductor switch 222 should be in the non-conducting state, and thus the temperature associated with the heater 260 monitored by the heater temperature monitoring module 230 will begin to decline (e.g., after any transient effects within the subsystem 200 have taken place).

The concentration action threshold is selected so as to ensure that the interruption switch 242 moves into the second state and thus prevents a drive signal from being received by the driver module 229 before the concentration of refrigerant within the space approaches a lower flammability limit (LFL) thereof. For example, if the LFL of the refrigerant is 18 volume percent, the concentration action threshold may be equal to or less than 16 volume percent.

Nevertheless, if the temperature associated with the heater 260 monitored by the heater temperature monitoring module 230 instead increases to the heater temperature action threshold when the subsystem 200 is in the second mode, the subsystem 200 moves into the third mode (see FIG. 5). In the third mode, the bimetallic switch 232 is in the second state and therefore the interlock loop of which it forms a part is broken. Consequently, the interlock arrangement 280 causes the isolation arrangement 210 to isolate the power terminals 202, 204 from the modulation arrangement 220 and the heater 260 by opening the contactors 212, 214. It follows that, in the third mode, power cannot be supplied from the power terminals 202, 204 to the rest of the system due to the isolation provided by the isolation arrangement 210.

If the semiconductor switch 222 and the modulation arrangement 220 as a whole are functioning correctly, electrical power is prevented from flowing from the power terminals 202, 204 to the heater 260 via the isolation arrangement 210 and the modulation arrangement 220 when the subsystem 200 is in the second mode. However, if the modulation arrangement 220 is not functioning correctly (e.g., the semiconductor switch 222 has failed in a permanently conducting state), electrical power may still flow from the power terminals 202, 204 to the heater 260 via the isolation arrangement 210 and the modulation arrangement 220 when in the second mode. The third mode represents a fail-safe provision which enables electrical power to be prevented from flowing from the power terminals 202, 204 to the heater 260 when the modulation arrangement may be functioning incorrectly.

The heater temperature action threshold is selected so as to ensure that the bimetallic switch 232 moves into the second state and thus the interlock arrangement 280 causes the isolation arrangement 210 to prevent the supply of electrical power from the power terminals 202, 204 well before the heater 260 approaches an autoignition temperature of the refrigerant which the vapour-compression refrigeration circuit 400 circulates during operation.

To this end, the heater temperature action threshold may be at least 100°C lower than the autoignition temperature of the refrigerant. By way of example, if the autoignition temperature of the refrigerant is 800°C, the heater temperature action threshold may be equal to or less than 700°C. This provides an adequate safety margin even after taking account transient effects which may be present within the subsystem 200 and/or the vapour-compression refrigeration circuit 400 which may cause the temperature of the heater 260 to continue to rise even after the supply of electrical power from the power terminals 202, 204 is cut off by the isolation arrangement 210. In some examples, the heater temperature action threshold may be no greater than 200°C (e.g., 175°C, 150°C, 125°C or 100°C) and the heater temperature sensor module 230 may be located at a suitable distance away from the heater 260 such that the temperature of the portion of the bimetallic switch 232 reaching or exceeding the heater temperature action threshold is indicative of the temperature of the heater 260 approaching the autoignition temperature of the refrigerant. This allows simple/common off-the-shelf bimetallic switches to be used as part of the heater temperature sensor module 230, which is associated with an improve ease of manufacture/assembly of the subsystem 200.

Heating systems (e.g., subsystems) in accordance with the present disclosure provide means for ensuring safe operation of a refrigeration system. In particular, subsystems in accordance with the present disclosure provide software- independent means of ensuring safe operation of the refrigeration system. In particular, the cooperative interaction of the heater temperature sensor module 230 and the interlock arrangement 280 provide means for ensuring that electrical power is not supplied to the heater regardless of the software provided to the controller/RIOC 290 and without relying on the correct functioning of the modulation arrangement 220 when the temperature associated with the heater 260 approaches an autoignition temperature of a refrigerant circulated by the vapour-compression refrigeration circuit 400. This provides a layer of hardware-based overtemperature protection to the subsystem 200 and the refrigeration system 20 as a whole. In a similar way, the cooperative interaction of the concentration sensor module 240 and the interruption switch 242 provides means for ensuring that the driver module 229 does not act on signals from the controller/RIOC 290 to provide heating to the evaporator 408 when the concentration of refrigerant within the relevant space reaches or exceeds an appropriate level. Therefore, subsystems in accordance with the present disclosure provide hardware-based and software-independent safety elements to a refrigeration system. Such safety elements may be of particular value in the contact of refrigeration systems circulating low GWP refrigerants which may be relatively flammable compared with more traditional refrigerant types and thus present a relatively greater safety challenge, which subsystems in accordance with the present invention may aid the meeting of such challenges. In other words, subsystems in accordance with the present inventions solve problems relating to the safety of refrigeration systems which, in use, circulate relatively flammable refrigerants such as A2L type refrigerants.

Except where mutually exclusive, a feature described in relation to any one of the above aspects may be applied mutatis mutandis to any other aspect. Furthermore, except where mutually exclusive, any feature described herein may be applied to any aspect and/or combined with any other feature described herein. Moreover, while the present disclosure is made with in the context of transport refrigeration systems and/or vapour-compression refrigeration circuits, it will be appreciated that the present disclosure has other possible applications in other technical areas.

## Claims

1. A heating system (200) for a refrigeration system (20), the heating system comprising:
a heater (260);
power terminals (202, 204) configured to receive electrical power from a source (115);
a heater temperature sensor module (230) configured to change from a first state to a second state when a temperature associated with the heater reaches or exceeds a heater temperature action threshold; and
an electrical interlock arrangement (280) configured to prevent supply of electrical power from the power terminals to the heater when the heater temperature sensor module is in the second state.

2. The heating system (200) of claim 1, wherein the heater temperature sensor module (230) comprises a bimetallic switch (232).

3. The heating system (200) of claim 1 or claim 2, comprising a supply switch (212, 214) located between the power terminals (202, 204) and the heater (260), wherein the electrical interlock arrangement (280) is configured to prevent supply of electrical power from the power terminals to the heater when the heater temperature sensor module is in the second state by causing the supply switch to be in a non-conducting state.

4. The heating system (200) of any preceding claim, wherein the heater temperature action threshold is no greater than 200°C.

5. The heating system (200) of any preceding claim, comprising a controller (290) configured to determine whether the heater temperature sensor module (230) is in the first state or the second state.

6. The heating system (200) of any preceding claim, comprising:
a semiconductor switch (222) operable to modulate supply of electrical power from the power terminals (202, 204) to the heater (260); and
a driver module (229) configured to control the semiconductor switch based on a drive signal.

7. The heating system (200) of claim 6, wherein the driver module (229) is configured to vary a duty cycle of a control signal for the semiconductor switch (222) based on the drive signal.

8. The heating system (200) of any of claims 6 to 7, comprising a controller (290) configured to generate the drive signal.

9. The heating system (200) of any preceding claim, comprising a heat exchanger (408) configured to allow a refrigerant to be conveyed therethrough, wherein the heater (260) is configured to provide heat to the heat exchanger.

10. The heating system (200) of claim 8 and claim 9, wherein the controller (290) is configured to:
determine a temperature associated with the heat exchanger (408); and
generate the drive signal based on the determined temperature.

11. The heating system (200) of claim 10, wherein the controller (290) is configured to determine the temperature associated with the heat exchanger (208) based on a signal from a heat exchanger temperature sensor module (250) configured to monitor a temperature associated with the heat exchanger.

12. The heating system (200) of claim 6, wherein the heater (260) is disposed within a space (24), the heating system comprising:
an interruption switch (242) configured to prevent the driver module from receiving the drive signal when in a non-conducting state; and
a concentration sensor module (240) configured to:
monitor a concentration of refrigerant in the space;
cause the interruption switch to be in the non-conducting state when the monitored concentration of refrigerant reaches or exceeds a concentration action threshold.

13. The heating system (200) of claim 12, comprising a controller (290) configured to determine whether the interruption switch (242) is in the non-conducting state.

14. A refrigeration system (20) comprising the heating system (200) of any preceding claim.

## Amended claims

### Amended claims in accordance with Rule 137(2) EPC.

1. A heating system (200) for a refrigeration system (20), the heating system comprising:
a heater (260);
power terminals (202, 204) configured to receive electrical power from a source (115);
a heater temperature sensor module (230) configured to change from a first state to a second state when a temperature associated with the heater reaches or exceeds a heater temperature action threshold;
**characterized in that**:
the heating system further comprises:
an electrical interlock arrangement (280);
an interlock loop extending from a first port (281) of the electrical interlock arrangement, through the heater temperature sensor module, to a second port (282) of the electrical interlock arrangement; and
a supply switch (212, 214) located between the power terminals (202, 204) and the heater (260), and
the electrical interlock arrangement (280) is configured to prevent supply of electrical power from the power terminals to the heater when the heater temperature sensor module is in the second state by causing the supply switch to be in a non-conducting state in response to the interlock loop being broken.

2. The heating system (200) of claim 1, wherein the heater temperature sensor module (230) comprises a bimetallic switch (232).

3. The heating system (200) of any preceding claim, wherein the heater temperature action threshold is no greater than 200°C.

4. The heating system (200) of any preceding claim, comprising a controller (290) configured to determine whether the heater temperature sensor module (230) is in the first state or the second state.

5. The heating system (200) of any preceding claim, comprising:
a semiconductor switch (222) operable to modulate supply of electrical power from the power terminals (202, 204) to the heater (260); and
a driver module (229) configured to control the semiconductor switch based on a drive signal.

6. The heating system (200) of claim 5, wherein the driver module (229) is configured to vary a duty cycle of a control signal for the semiconductor switch (222) based on the drive signal.

7. The heating system (200) of any of claims 5 to 6, comprising a controller (290) configured to generate the drive signal.

8. The heating system (200) of any preceding claim, comprising a heat exchanger (408) configured to allow a refrigerant to be conveyed therethrough, wherein the heater (260) is configured to provide heat to the heat exchanger.

9. The heating system (200) of claim 7 and claim 8, wherein the controller (290) is configured to:
determine a temperature associated with the heat exchanger (408); and
generate the drive signal based on the determined temperature.

10. The heating system (200) of claim 9, wherein the controller (290) is configured to determine the temperature associated with the heat exchanger (208) based on a signal from a heat exchanger temperature sensor module (250) configured to monitor a temperature associated with the heat exchanger.

11. The heating system (200) of claim 5, wherein the heater (260) is disposed within a space (24), the heating system comprising:
an interruption switch (242) configured to prevent the driver module from receiving the drive signal when in a non-conducting state; and
a concentration sensor module (240) configured to:
monitor a concentration of refrigerant in the space;
cause the interruption switch to be in the non-conducting state when the monitored concentration of refrigerant reaches or exceeds a concentration action threshold.

12. The heating system (200) of claim 11, comprising a controller (290) configured to determine whether the interruption switch (242) is in the non-conducting state.

13. A refrigeration system (20) comprising the heating system (200) of any preceding claim.
